# EUROPEAN PATENT SPECIFICATION

(11) **EP 3 249 878 B1**
(45) Date of publication and mention of the grant of the patent: **28.09.2022**
(21) Application number: 17172061.8
(22) Date of filing: 19.05.2017
(51) Int. Cl.: G06F 21/32, H04W 88/02, G06F 1/16, G06F 3/01, G06K 9/00, G06F 3/04883, G06F 3/0354, H04W 12/065

(54) **SYSTEMS AND METHODS FOR DIRECTIONAL SENSING OF OBJECTS ON AN ELECTRONIC DEVICE**
SYSTEME UND VERFAHREN ZUR DIREKTIONALEN MESSUNG VON OBJEKTEN AUF EINER ELEKTRONISCHEN VORRICHTUNG
SYSTÈMES ET PROCÉDÉS DE DÉTECTION DE LA DIRECTION D'OBJETS SUR UN DISPOSITIF ÉLECTRONIQUE

(30) Priority: 26.05.2016 US 201615165703
(43) Date of publication of application: 29.11.2017
(73) Proprietor: Motorola Mobility LLC, Chicago, IL 60654 (US)
(72) Inventor: VISSA, Sudhir C., Bensenville, IL 60106 (US); TYAGI, Vivek K., Chicago, IL 60654 (US); LAUTNER, Douglas, Round Lake, IL 60073 (US)
(74) Representative: Openshaw & Co.

(56) References cited:
- US-A1- 2010 321 289
- US-A1- 2013 076 485
- US-A1- 2013 129 162
- US-A1- 2015 126 246

## Description

### FIELD

This application generally relates to the directional sensing of objects on an electronic device. In particular, this application relates to determining a swipe direction of an object with respect to a biometric authentication sensor of an electronic device and performing an action on the electronic device in response to the determined swipe direction.

### BACKGROUND

Electronic devices, such as smartphones and tablet computers, have become ubiquitous. A typical electronic device includes a biometric authentication sensor that can be used for identification and access control. For example, a user may touch a digit, such as a thumb or a finger, to a biometric authentication sensor to unlock an electronic device. The biometric authentication sensor may capture a fingerprint to determine if the user is authorized to access the electronic device. If the user is authorized, the electronic device may be unlocked. If the user is not authorized, the electronic device may remain locked.

When an electronic device is unlocked, a user may desire to quickly perform actions but the user must wait until the unlocking process is completed. For example, a user may want to immediately use a certain application on the electronic device but have to wait until the unlocking process is finished, then start the application. This may be frustrating for the user because they may be accustomed to having immediate access to information and applications on the electronic device. Furthermore, an electronic device may have an always-on display for displaying information when the electronic device is locked. While a user of such an electronic device may be able to see information on the display, the user must still unlock the electronic device before being able to perform other actions.

Accordingly, there is an opportunity for systems and methods that address these concerns and improve the user experience for electronic devices having biometric authentication sensors.

US2010/321289 discloses a small portable device provided with proximity sensors to allow for gesture control. US 2013/01291 62 discloses a device having a touch screen which is used to detect both an input and a fingerprint of a user. Functionality of the device is varied in accordance with the identity of the user and /or the nature of the input. US2013/076485 discloses a method for authenticating a fingerprint. Based on which fingerprint is authenticated, different (assigned) action on the device will be performed.

### SUMMARY

The invention is defined by the appended set of claims. In the following description, anything referred to as an embodiment which does not fall within the scope of the appended set of claims is to be understood as an example useful for understanding the invention.

In an embodiment, a method includes receiving one or more signals at a processor of an electronic device from one or more proximity sensors, the one or more signals indicating a presence of an object, the one or more proximity sensors adjacent to a biometric authentication sensor of the electronic device; determining a swipe direction of the object with respect to the biometric authentication sensor based on the one or more signals, using the processor; and performing an action on the electronic device in response to determining the swipe direction, using the processor. The determining of the swipe direction may include assigning the swipe direction based on an order of the one or more signals received from the one or more proximity sensors. The determining of the swipe direction may include assigning the swipe direction based on an order of the one or more signals received from the one or more proximity sensors and the second signal received from the biometric authentication sensor.

In another embodiment, an electronic device includes a biometric authentication sensor, one or more proximity sensors each adjacent to the biometric authentication sensor and adapted to output a signal indicating the presence of an object, and a processor operatively coupled with the biometric authentication sensor and the one or more proximity sensors, the processor determining a swipe direction of the object with respect to the biometric authentication sensor based on the signal from the one or more proximity sensors, and the processor performing an action on the electronic device in response to determining the swipe direction. The processor may determine the swipe direction by assigning the swipe direction based on an order of the one or more signals received from the one or more proximity sensors. The processor may determine the swipe direction by assigning the swipe direction based on an order of the one or more signals received from the one or more proximity sensors and the second signal received from the biometric authentication sensor.

### BRIEF DESCRIPTION OF THE DRAWINGS

The accompanying figures, where like reference numerals refer to identical or functionally similar elements throughout the separate views, together with the detailed description below, are incorporated in and form part of the specification, and serve to further illustrate embodiments of concepts that include the claimed embodiments, and explain various principles and advantages of those embodiments.
FIG. 1 is a block diagram of a directional sensing system included in an electronic device, in accordance with some embodiments.
FIGs. 2-10 are schematic representations of arrangements of proximity sensor(s) and a biometric authentication sensor included in an electronic device, in accordance with some embodiments.
FIG. 11 is a flow diagram depicting the determination of a swipe direction and the performance of an action in response to the swipe direction, in accordance with some embodiments.
FIG. 12 is a flow diagram depicting the determination of a swipe direction, the authentication of a user, and the performance of an action in response to the swipe direction and/or based on the authentication of the user, in accordance with some embodiments.
FIG. 13 is a flow diagram depicting the determination of a swipe direction, the performance of an action in response to the swipe direction, and the authentication of a user following the action, in accordance with some embodiments.
FIG. 14 is a flow diagram depicting the determination of a swipe direction including ignoring one of the signals from a sensor for a predetermined time period, in accordance with some embodiments.

### DETAILED DESCRIPTION

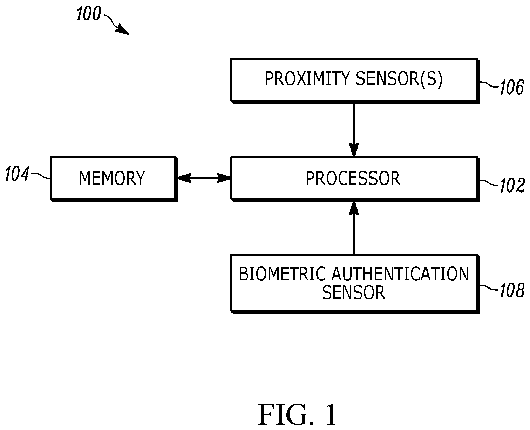

FIG. 1 illustrates a directional sensing system 100 included in an electronic device in which embodiments may be implemented. The directional sensing system 100 may receive and process signals from one or more proximity sensors 106 and/or a biometric authentication sensor 108 to determine a swipe direction of an object with respect to the biometric authentication sensor 108, and perform one or more actions on the electronic device in response to determining the swipe direction. The order of one or more of the signals may be utilized to determine the swipe direction. The directional sensing system 100 may include a processor 102 in communication with a memory 104, the one or more proximity sensors 106, and the biometric authentication sensor 108. In embodiments, the directional sensing system 100 may be implemented as discrete logic. For example, the proximity sensors 106 and the biometric authentication sensor 108 may be implemented as a standalone sensor.

By determining the swipe direction of an object in conjunction with the biometric authentication sensor 108, the directional sensing system 100 may allow one or more actions to be performed on the electronic device in addition to the authentication of a user, instead of just authentication of the user. Also, the directional sensing system 100 may allow a user to perform tasks more quickly and have faster and more secure access to applications. The directional sensing system 100 may also be utilized for navigational purposes, e.g., to replace a joystick to navigate applications executing on the electronic device. Therefore, a user may have a better experience and be more satisfied with the operation of the electronic device. It should be appreciated that other benefits and efficiencies are envisioned.

The electronic device may be stationary or portable and may be, for example, a smartphone, a cellular phone, a personal digital assistant, a tablet computer, a laptop computer, a desktop computer, a networked television set, or the like. The software in the memory 104 of the electronic device may include one or more separate programs or applications. The programs may have ordered listings of executable instructions for implementing logical functions. The software may include a suitable operating system of the electronic device, such as Android from Google, Inc., iOS from Apple, Inc., or Windows Phone and Windows 10 Mobile from Microsoft Corporation. The operating system essentially controls the execution of other computer programs, and provides scheduling, input-output control, file and data management, memory management, and communication control and related services.

The electronic device may include a transceiver (not shown) that sends and receives data over a network, for example. The transceiver may be adapted to receive and transmit data over a wireless and/or wired connection. The transceiver may function in accordance with the IEEE 802.11 standard or other standards. More particularly, the transceiver may be a WWAN transceiver configured to communicate with a wide area network including one or more cell sites or base stations to communicatively connect the electronic device to additional devices or components. Further, the transceiver may be a WLAN and/or WPAN transceiver configured to connect the electronic device to local area networks and/or personal area networks, such as a Bluetooth network.

The electronic device may also include additional I/O components (not shown), such as keys, buttons, lights, LEDs, cursor control devices, haptic devices, etc. The display and the additional I/O components may be considered to form portions of a user interface (e.g., portions of the electronic device associated with presenting information to the user and/or receiving inputs from the user). In some embodiments, the display is a touchscreen display composed of singular or combinations of display technologies such as electrophoretic displays, electronic paper, polyLED displays, OLED displays, AMOLED displays, liquid crystal displays, electrowetting displays, rotating ball displays, segmented displays, direct drive displays, passivematrix displays, active-matrix displays, lenticular barriers, and/or others. Further, the display can include a thin, transparent touch sensor component superimposed upon a display section that is viewable by a user. For example, such displays include capacitive touch screens, resistive touch screens, surface acoustic wave (SAW) touch screens, optical imaging touch screens, and the like.

The proximity sensor(s) 106 and the biometric authentication sensor 108 may be positioned on the electronic device for ease of user access. For example, the proximity sensor(s) 106 and the biometric authentication sensor 108 may be positioned on the back of the electronic device where a user would rest one or more fingers when grasping the electronic device. As another example, the proximity sensor(s) 106 and the biometric authentication sensor 108 may be positioned on a bezel area around a display of the electronic device. The biometric authentication sensor 108 may be, for example, a fingerprint sensor. Accordingly, an object, such as a finger or thumb, may be placed on the biometric authentication sensor 108 so that the electronic device can authenticate the user to allow access to the electronic device.

The proximity sensors 106 may be able to detect the proximity of an object at a predetermined distance. In embodiments, the proximity sensors 106 may include one or more light emitting diodes and one or more light receiving diodes that receive reflected energy corresponding to the energy emitted by the light emitting diodes. For example, infrared light from a light emitting diode may be emitted and a light receiving diode may receive a reflected response from an object. In embodiments, the proximity sensors 106 may be able to determine whether the object is part of a biological organism, such as a human, in order to minimize or eliminate the detection of non-desired objects, such as when the electronic device is in a pocket or bag.

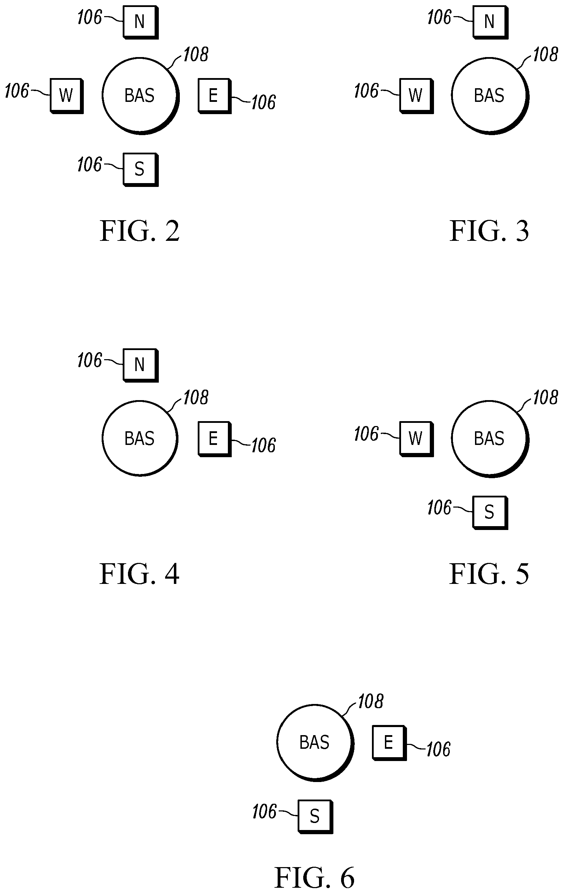

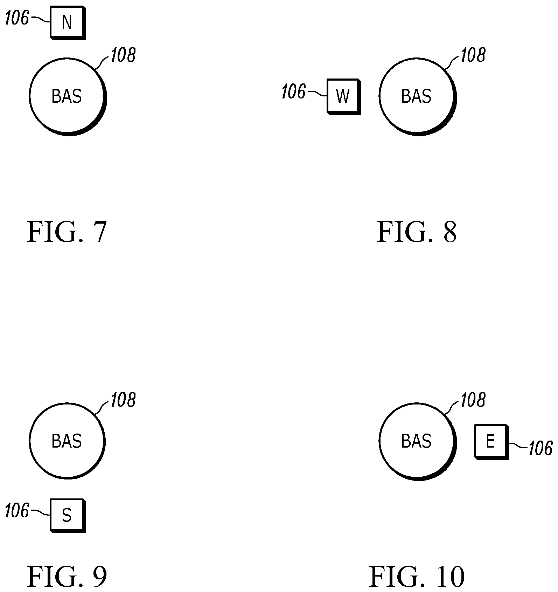

FIGs. 2-10 illustrate exemplary arrangements of one or more proximity sensors 106 and the biometric authentication sensor 108 (denoted as "BAS" in the figures) on an electronic device, in accordance with several embodiments. In particular, FIGs. 2-6 illustrate exemplary arrangements of the biometric authentication sensor 108 with multiple proximity sensors 106, and FIGs. 7-10 illustrate exemplary arrangements of the biometric authentication sensor 108 with a single proximity sensor 106. The directional sensing system 100 may utilize signals from the proximity sensor(s) 106 and/or the biometric authentication sensor 108 to determine a swipe direction of an object with respect to the biometric authentication sensor 108.

It should be noted that the shapes of the proximity sensor(s) 106 and the biometric authentication sensor 108 as illustrated in FIGs. 2-10 are merely exemplary and may be any suitable shapes. It should also be noted that the arrangements and orientations of the proximity sensor(s) 106 and the biometric authentication sensor 108 as illustrated in FIGs. 2-10 are also merely exemplary. For example, while FIGs. 2-10 illustrate that the proximity sensor(s) 106 are at various 0, 45, 90, and 180 degree positions about the perimeter of the biometric authentication sensor 108, the proximity sensor(s) 106 may be positioned at any suitable location. For ease of description, the following disclosure will denote the locations of the proximity sensor(s) 106 and the swipe directions in terms of cardinal direction with respect to the biometric authentication sensor 108, i.e., north (N) for above, east (E) for right, south (S) for below, and west (W) for left. For example, a swipe direction of N to S indicates that an object has moved from the top to the bottom of the biometric authentication sensor 108, and a swipe direction of W to E indicates that an object has moved from left to right of the biometric authentication sensor 108.

The swipe directions that can be determined by the directional sensing system 100 may be dependent on the number of proximity sensors 106. For example, in FIG. 2, the directional sensing system 100 includes four proximity sensors 106 that are positioned on four sides of the biometric authentication sensor 108. In FIGs. 3-6, the directional sensing system 100 includes two proximity sensors 106 that are positioned on two sides of the biometric authentication sensor 108. Although not shown in FIGs. 3-6, it is contemplated that embodiments could include two proximity sensors 106 could be positioned on opposite sides of the biometric authentication sensor 108, e.g., N and S, or E and W. In FIGs. 7-10, the directional sensing system 100 includes a single proximity sensor 106 that is positioned on a side of the biometric authentication sensor 108. The arrangements in FIGs. 3-10 may be utilized to reduce the number of parts included in the electronic device, for example, in contrast to the arrangement illustrated in FIG. 2.

In these arrangements, the directional sensing system 100 may be able to determine the swipe direction of an object in multiple directions, e.g., N to S, S to N, E to W, W to E, etc., based on the signals received from the proximity sensor(s) 106 and/or the biometric authentication sensor 108. The determined swipe direction may also be in non-linear directions, e.g., N to E, S to W, E to S, etc., in some embodiments. The signals may indicate that an object has been detected by a particular sensor, whether the object is moving towards or away from a particular sensor, and/or whether the object has activated a particular sensor. For example, a swipe direction of an object may be determined based on the biometric authentication sensor 108 being activated by the object in combination with the proximity sensor(s) 106 detecting the object and/or detecting movement of the object towards or away from the proximity sensor(s) 106.

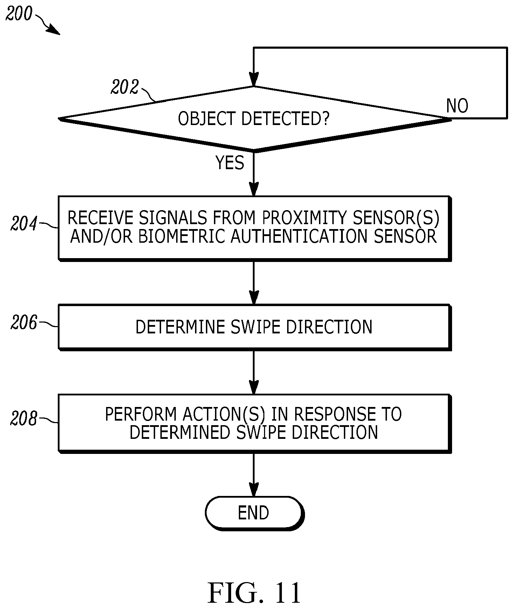

FIGs. 11-14 illustrate embodiments of respective methods 200, 300, 400, 500 related to receiving and processing signals from one or more proximity sensors 106 and/or a biometric authentication sensor 108 to determine a swipe direction of an object, and perform one or more actions on the electronic device in response to determining the swipe direction, using the directional sensing system 100. In general, a computer program product in accordance with the embodiments includes a computer usable storage medium (e.g., standard random access memory (RAM), an optical disc, a universal serial bus (USB) drive, or the like) having computer-readable program code embodied therein, wherein the computer-readable program code is adapted to be executed by the processor (e.g., working in connection with an operating system) to implement the methods described below. In this regard, the program code may be implemented in any desired language, and may be implemented as machine code, assembly code, byte code, interpretable source code or the like (e.g., via C, C++, Java, Actionscript, Objective-C, Javascript, CSS, XML, and/or others).

The proximity sensor(s) 106 and/or the biometric authentication sensor 108 in the directional sensing system 100 may determine whether an object has been detected, such as at step 202, 302, 402 of method 200, 300, 400 shown in FIGs. 11-13, respectively. Typically, the detected object may be a finger or thumb of a user. If an object is not detected at step 202, 302, 402, then the method 200, 300, 400 may remain at step 202, 302, 402 to determine if an object is detected. However, if an object is detected at step 202, 302, 402, then the method 200, 300, 400 may continue to step 204, 304, 404.

The directional sensing system 100 may receive one or more signals from the proximity sensor(s) 106 and/or the biometric authentication sensor 108, such as step 204, 304, 404 of method 200, 300, 400, respectively. In some embodiments, the respective signals from the proximity sensor(s) 106 and/or the biometric authentication sensor 108 may be received in the order in which objects were detected. In other embodiments, the signals received at step 204, 304, 404 may also indicate whether the detected object is moving away from the proximity sensor(s) 106 and/or whether the biometric authentication sensor 108 has been activated.

The swipe direction may be determined by the directional sensing system 100 at step 206, 306, 406 of method 200, 300, 400, respectively. In some embodiments, determining the swipe direction may include assigning the swipe direction based on the order of the signals received at step 204, 304, 404. For example, in the arrangement illustrated in FIG. 2, if the W proximity sensor 106 senses an object, followed by the E proximity sensor 106 sensing an object, then the signals received at step 204, 304, 404 are a signal from the W proximity sensor 106 followed by a signal from the E proximity sensor 106. The assigned swipe direction may be determined to be W to E at step 206, 306, 406.

As another example for the arrangement illustrated in FIG. 2, the swipe direction may be determined at step 206, 306, 406 to be S to N if the S proximity sensor 106 senses an object, the biometric authentication sensor 108 is activated, and the N proximity sensor 106 senses an object. In this case, the signals received at step 204, 304, 404 are a signal from the S proximity sensor 106, followed by a signal from the biometric authentication sensor 108, and followed by a signal from the N proximity sensor 106. As a further example for the arrangement illustrated in FIG. 2, if the S proximity sensor 106 senses an object, followed by the W proximity sensor 106 sensing an object, then the signals received at step 204, 304, 404 are a signal from the S proximity sensor 106 followed by a signal from the W proximity sensor 106. The assigned swipe direction may be determined to be S to W at step 206, 306, 406. In the arrangement illustrated in FIG. 9, as another example, the proximity sensor 106 may detect an object followed by the biometric authentication sensor 108 being activated. The signals received at step 204, 304, 404 in this case are a signal from the proximity sensor 106 followed by a signal from the biometric authentication sensor 108. At step 206, 306, 406, the assigned swipe direction may be determined to be S to N.

An additional example for the arrangement illustrated in FIG. 2 includes when the order of signals received at step 204, 304, 404 are a signal from the N proximity sensor 106, a signal from the biometric authentication sensor 108, a signal from the E proximity sensor 106, and a signal from the S proximity sensor 106. In this case, the assigned swipe direction at step 206, 306, 406 may be determined to be N to E to S. In an embodiment, the assigned swipe direction at step 206, 306, 406 may also include the activation of the biometric authentication sensor 108 and accordingly be determined to be N to BAS to E to S. In another embodiment, the biometric authentication sensor 108 may be activated twice so that the order of the signals received at step 204, 304, 404 are a signal from the N proximity sensor 106, a first signal from the biometric authentication sensor 108, a signal from the E proximity sensor 106, a second signal from the biometric authentication sensor 108, and a signal from the S proximity sensor 106. In this case, the assigned swipe direction at step 206, 306, 406 may be determined to be N to BAS to E to BAS to S. The user may be authenticated during one of the activations of the biometric authentication sensor 108, in some embodiments.

Further examples include if there are proximity sensors 106 positioned on opposite sides of the biometric authentication sensor 108. For example, there may be two proximity sensors 106 arranged about the biometric authentication sensor 108, i.e., N proximity sensor 106 and S proximity sensor 106. If the order of signals received at step 204, 304, 404 are a signal from the N proximity sensor 106, a signal from the biometric authentication sensor 108, and a signal from the S proximity sensor 106, then the assigned swipe direction at step 206, 306, 406 may be determined to be N to S. In an embodiment, the assigned swipe direction at step 206, 306, 406 may also include the activation of the biometric authentication sensor 108 and accordingly be determined to be N to BAS to S.

As another example, there may be two proximity sensors 106 arranged about the biometric authentication sensor 108, i.e., W proximity sensor 106 and E proximity sensor 106. If the order of signals received at step 204, 304, 404 are a signal from the biometric authentication sensor 108, a signal from the W proximity sensor 106, and a signal from the E proximity sensor 106, then the assigned swipe direction at step 206, 306, 406 may be determined to be W to E. In this case, the activation of the biometric authentication sensor 108 may be for user authentication purposes. In an embodiment, the assigned swipe direction at step 206, 306, 406 may also include the activation of the biometric authentication sensor 108 and accordingly be determined to be BAS to W to E. In another embodiment, the biometric authentication sensor 108 may be activated twice so that the order of the signals received at step 204, 304, 404 are a first signal from the biometric authentication sensor 108, a signal from the W proximity sensor 106, a second signal from the biometric authentication sensor 108, and a signal from the E proximity sensor 106. In this case, the assigned swipe direction at step 206, 306, 406 may be determined to be W to E, the user may be authenticated during one of the activations of the biometric authentication sensor 108, and the other activation of the biometric authentication sensor 108 may be ignored.

In the arrangement illustrated in FIG. 9, as another example, the biometric authentication sensor 108 may be activated, followed by the proximity sensor 106 detecting an object. The signals received at step 204, 304, 404 in this case are a signal from the biometric authentication sensor 108 followed by a signal from the proximity sensor 106. At step 206, 306, 406, the assigned swipe direction may be determined to be towards S. In embodiments, the assigned swipe direction may be determined at step 206, 306, 406 to be N to S, or to be BAS to S.

In the arrangement illustrated in FIG. 7, as a further example, the proximity sensor 106 may detect an object followed by the biometric authentication sensor 108 being activated. The signals received at step 204, 304, 404 in this case are a signal from the proximity sensor 106 followed by a signal from the biometric authentication sensor 108. At step 206, 306, 406, the assigned swipe direction may be determined to be away from N. In embodiments, the assigned swipe direction may be determined at step 206, 306, 406 to be N to S, or to be N to BAS.

In other embodiments, determining the swipe direction may include assigning the swipe direction based on the order of the signals received at step 204, 304, 404 and whether the signals indicate that the object is moving towards or away from a sensor. For the arrangement illustrated in FIG. 3, for example, the N proximity sensor 106 may sense that an object is moving away from it. The signal received at step 204, 304, 404 indicates that the object is moving away from the N proximity sensor 106, and the assigned swipe direction may be determined as N to S at step 206, 306, 406. As another example, for the arrangement illustrated in FIG. 6, if the E proximity sensor 106 senses that an object is moving away from it and the S proximity sensor 106 senses that an object is moving away from it, then the signals received from the E proximity sensor 106 and the S proximity sensor 106 at step 204, 304, 404 are the signals indicating these movements. The assigned swipe direction may be determined as E to N at step 206, 306, 406. As a further example, for the arrangement illustrated in FIG. 10, the proximity sensor 106 may sense that an object is moving toward it. The signal received at step 204, 304, 404 indicates that the object is moving toward the proximity sensor 106, and the assigned swipe direction may be determined as W to E at step 206, 306, 406.

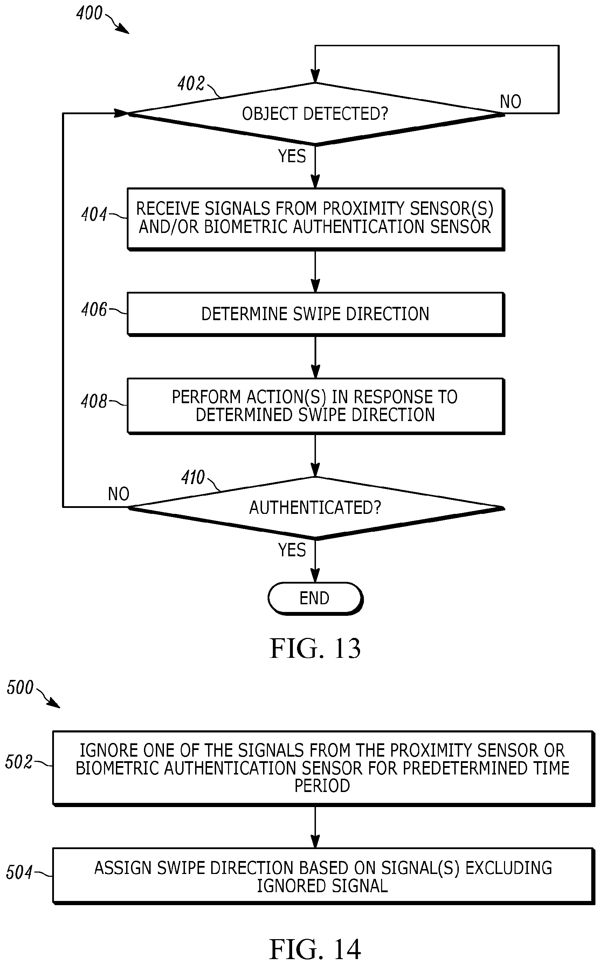

A further embodiment of step 206, 306, 406 for determining the swipe direction is shown in the method 500 of FIG. 14. At step 502, at least one of the signals from the proximity sensor(s) 106 and/or the biometric authentication sensor 108 may be ignored for a predetermined amount of time. Ignoring one of the signals may minimize or eliminate the false detection of an object so that only intentional swipes by a user are detected. For example, a user's finger typically comes from the S direction (i.e., up from the bottom of the electronic device) when the user is grasping the electronic device. In this case, the user's finger (including the fingertip) and/or the palm may cover the S proximity sensor 106, such as in the arrangements illustrated in FIGs. 2, 5, 6, and 9, but the user may not intend to perform a swipe. In this case, signals from the S proximity sensor 106 may be ignored for a predetermined time period so that a swipe is not inadvertently detected.

Signals from the other non-ignored proximity sensor(s) 106 and/or the biometric authentication sensor 108 may be used at step 504 to assign a swipe direction. For example, for the arrangement illustrated in FIG. 2, the S proximity sensor 106 may detect an object, followed by the E proximity sensor 106 detecting an object, and followed by a signal from the W proximity sensor 106. In this case, the signal from the S proximity sensor 106 may be ignored at step 502, and the signals from the E proximity sensor 106 followed by the W proximity sensor 106 may be received. The assigned swipe direction may be determined to be E to W at step 504. As another example, for the arrangement illustrated in FIG. 5, the S proximity sensor 106 may detect an object. The signal from the S proximity sensor 106 may be ignored for a predetermined time period. After the predetermined time period has elapsed, the S proximity sensor 106 may sense that an object is moving away from it and transmit a signal indicating this movement. In this case, the assigned swipe direction may be determined as S to N because it can be presumed that the user's swipe movements are intentional since the predetermined time period has elapsed.

Returning to FIGs. 11-13, the method 200, 300, 400 may continue after the swipe direction has been determined. In the embodiment shown in the method 200 of FIG. 11, an action may be performed on the electronic device at step 208 in response to the determined swipe direction. One or more actions may be performed at step 208. The action(s) may be performed at step 208 after the user has been authenticated through the biometric authentication sensor 108, in some embodiments. In other embodiments, the action(s) may be performed at step 208 without the user being authenticated through the biometric authentication sensor 108 and/or without the object activating the biometric authentication sensor 108. For example, a non-secure application that does not need authentication may be executed as the action.

Actions may include, for example, opening an application (e.g., email), calling a phone number (e.g., from a pre-stored contacts list), sending a predetermined text message or email (e.g., in response to notifications), taking a picture with a camera on the electronic device, securely previewing notifications, silencing calls or other sounds on the electronic device, or another action. After the action is performed at step 208, the method 200 may be complete.

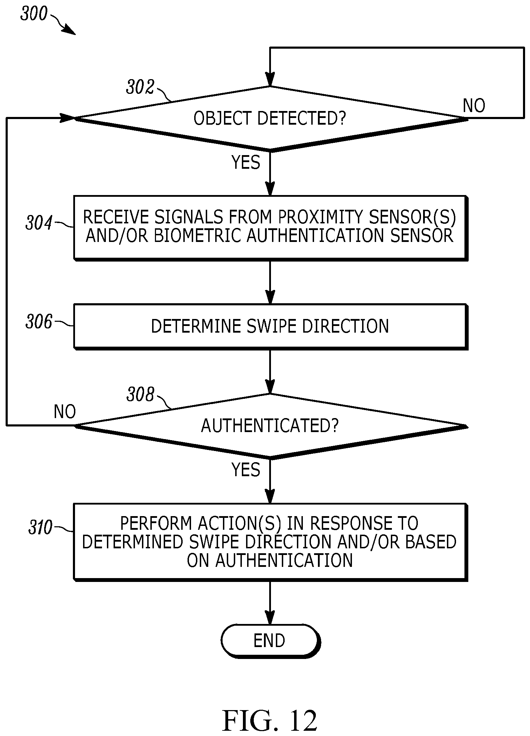

In the embodiment shown in the method 300 of FIG. 12, it may be determined at step 308 whether the user has been authenticated through the biometric authentication sensor 108. If the user is not authenticated at step 308, then the method 300 may return to step 302 to determine whether an object has been detected. However, if the user is authenticated at step 308, then the method 300 may continue to step 310. At step 310, an action may be performed on the electronic device in response to the determined swipe direction and/or based on the authentication. The allowable actions performed at step 310 may be restricted based on the user who has been authenticated. For example, a particular user (e.g., a child) may not be allowed to have access to all applications on the electronic device. When this user is authenticated at step 308, then the allowable actions performed at step 310 may only include opening an application that this user has access to. As another example, after a user is authenticated at step 308, the allowable actions performed at step 310 may include using the proximity sensor(s) 106 and/or the authentication sensor 108 as a secure joystick. In this scenario, the user could navigate on the electronic device in all directions, e.g., N, NE, E, SE, S, SW, W, and NW. After the action is performed at step 310, the method 300 may be complete.

In the embodiment shown in the method 400 of FIG. 13, an action may be performed on the electronic device at step 408 in response to the determined swipe direction. In this embodiment, the action may include, for example, determining the particular credentials that are allowed for authentication purposes. At step 410, it may be determined whether the user has been authenticated through the biometric authentication sensor 108. The authentication at step 410 may compare the user to the particular credentials determined at step 408. For example, a particular user may swipe in a certain direction so that the action performed at step 408 is to utilize credentials for a corporate network. At step 410 in this example, the user may be authenticated against these credentials. If the user is not authenticated at step 410, then the method 400 may return to step 402 to determine whether an object has been detected. However, if the user is authenticated at step 410, then the method 400 is complete.

Thus, it should be clear from the preceding disclosure that systems and methods for directional sensing of objects on an electronic device may be performed to improve the user experience. The systems and methods can cause a user to be more satisfied with the operation of the electronic device.

This disclosure is intended to explain how to fashion and use various embodiments in accordance with the technology rather than to limit the true, intended, and fair scope and spirit thereof. The foregoing description is not intended to be exhaustive or to be limited to the precise forms disclosed. Modifications or variations are possible in light of the above teachings. The embodiment(s) were chosen and described to provide the best illustration of the principle of the described technology and its practical application, and to enable one of ordinary skill in the art to utilize the technology in various embodiments and with various modifications as are suited to the particular use contemplated.

Further aspects of the invention are provided by the subject matter of the appended claims.

## Claims

1. A method in an electronic device comprising a processor, a touchscreen display arranged on the front of the device, a fingerprint sensor, and adjacent to the fingerprint sensor a plurality of proximity sensors distinct from both the touchscreen and the fingerprint sensor, a first of the proximity sensors being to one side of the fingerprint sensor, and a second of the proximity sensors being to another side of the fingerprint sensor, the method comprising:
receiving (304, 404) signals at the processor of the electronic device from the plurality of proximity sensors, the signals including a signal from each of the first and second proximity sensors, the signals indicating the presence of an object;
determining (306, 406) a swipe direction of the object based on the signals, using the processor;
wherein the determining of the swipe direction of the object is with respect to the fingerprint sensor;
determining (308, 410) whether the fingerprint sensor has authenticated the object;
in the event that the fingerprint sensor is determined to have authenticated the object, performing an action (310, 408) on the electronic device in response to the authentication and the swipe direction, using the processor; wherein:
the plurality of proximity sensors and the fingerprint sensor are positioned on the back of the electronic device or are positioned on a bezel area around the touchscreen display of the electronic device;
the plurality of proximity sensors are each positioned to a different side of the fingerprint sensor;
the object is a finger or a thumb;
and the action is one of:
opening an application, calling a phone number, sending a predetermined text message or email, taking a picture with a camera on the electronic device, or securely previewing notifications.

2. The method of claim 1, wherein determining the swipe direction comprises assigning the swipe direction based on the order of the signals received from the plurality of proximity sensors, using the processor.

3. The method of claim 1, wherein determining the swipe direction comprises:
ignoring (502) one of the signals from one of the plurality of proximity sensors for a predetermined time period, using the processor; and
assigning (504) the swipe direction based on an order of the signals received from the plurality of proximity sensors excluding the ignored signal, using the processor.

4. The method of any of claims 1 to 3, wherein determining the swipe direction comprises assigning the swipe direction based on whether the signals indicate that the object is moving towards or away from one or more of the plurality of proximity sensors, using the processor.

5. The method of any of claims 1 to 4, wherein receiving the signals comprises receiving the signals at the processor from the plurality of proximity sensors and a further signal from the fingerprint sensor, the further signal indicating activation of the fingerprint sensor.

6. The method of any of claims 1 to 5, wherein the one or more proximity sensors each comprise an infrared sensor having a light emitting diode and a light receiving diode.

7. An electronic device comprising:
a touchscreen display arranged on the front of the device;
a fingerprint sensor (108);
a processor (102); and, adjacent to the fingerprint sensor,
a plurality of proximity sensors (106) distinct from both the touchscreen and the fingerprint sensor, a first of the proximity sensors being to one side of the fingerprint sensor, and a second of the proximity sensors being to another side of the fingerprint sensor, the proximity sensors (106) being adapted to output a signal indicating the presence of an object, wherein the object is a finger or a thumb;
and
a processor (102) operatively coupled with the plurality of proximity sensors and with the fingerprint sensor, the processor being configured to determine a swipe direction of the object with respect to the fingerprint sensor based on signals received from the plurality of proximity sensors, the signals including a signal from each of the first and second proximity sensors, and being further configured to perform an action on the electronic device in response to determining the swipe direction and authenticating the object, wherein:
the plurality of proximity sensors and the fingerprint sensor are positioned on the back of the electronic device or are positioned on a bezel area around the display of the electronic device, and each of the plurality of proximity sensors is positioned to a different side of the fingerprint sensor; and the action is one of:
opening an application, calling a phone number, sending a predetermined text message or email, taking a picture with a camera on the electronic device, or securely previewing notifications.

8. The electronic device of claim 7, wherein the processor is configured to determine the swipe direction by assigning the swipe direction based on an order of the signals received from the plurality of proximity sensors.

9. The electronic device of claim 7, wherein the processor is configured to determine the swipe direction by:
ignoring one of the signals from one of the plurality of proximity sensors for a predetermined time period; and
assigning the swipe direction based on an order of the signals received from the plurality of proximity sensors excluding the ignored signal.

10. The electronic device of any of claims 7 to 9, wherein the processor is configured to determine the swipe direction by assigning the swipe direction based on whether the signals indicates that the object is moving towards or away from one or more of the plurality of proximity sensors.

11. The electronic device of any of claims 7 to 10, wherein the fingerprint sensor is adapted to output a signal indicating activation of the fingerprint sensor.

12. The electronic device of any of claims 7 to 11, wherein the one or more proximity sensors each comprise an infrared sensor having a light emitting diode and a light receiving diode.

## Patentansprüche

1. Verfahren in einer elektronischen Vorrichtung, umfassend einen Prozessor, eine Berührungsbildschirmanzeige, die auf der Vorderseite der Vorrichtung angeordnet ist, einen Fingerabdrucksensor und angrenzend an den Fingerabdrucksensor eine Vielzahl von Näherungssensoren, die sich sowohl von dem Berührungsbildschirm als auch von dem Fingerabdrucksensor unterscheiden, wobei ein erster der Näherungssensoren auf einer Seite des Fingerabdrucksensors und ein zweiter der Näherungssensoren auf einer anderen Seite des Fingerabdrucksensors liegt, das Verfahren umfassend:
Empfangen (304, 404) von Signalen an dem Prozessor der elektronischen Vorrichtung von der Vielzahl von Näherungssensoren, wobei die Signale ein Signal von jedem der ersten und der zweiten Näherungssensoren einschließen, wobei die Signale das Vorhandensein eines Objekts angeben;
Bestimmen (306, 406) einer Wischrichtung des Objekts basierend auf den Signalen unter Verwendung des Prozessors;
wobei das Bestimmen der Wischrichtung des Objekts hinsichtlich des Fingerabdrucksensors erfolgt;
Bestimmen (308, 410), ob der Fingerabdrucksensor das Objekt authentifiziert hat;
in dem Fall, dass bestimmt wird, dass der Fingerabdrucksensor das Objekt authentifiziert hat, Durchführen einer Aktion (310, 408) auf der elektronischen Vorrichtung als Reaktion auf die Authentifizierung und die Wischrichtung unter Verwendung des Prozessors; wobei:
die mehreren Näherungssensoren und der Fingerabdrucksensor auf der Rückseite der elektronischen Vorrichtung positioniert sind oder auf einem Einfassungsbereich um die Berührungsbildschirmanzeige der elektronischen Vorrichtung herum positioniert sind;
die Vielzahl von Näherungssensoren jeweils auf einer anderen Seite des Fingerabdrucksensors positioniert sind;
das Objekt ein Finger oder ein Daumen ist;
und die Aktion eine von Folgenden ist:
Öffnen einer Anwendung, Anrufen einer Telefonnummer, Senden einer zuvor bestimmten Textnachricht oder E-Mail, Aufnehmen eines Fotos mit einer Kamera auf der elektronischen Vorrichtung oder sichere Vorschau von Benachrichtigungen.

2. Verfahren nach Anspruch 1, wobei das Bestimmen der Wischrichtung ein Zuweisen der Wischrichtung basierend auf der Reihenfolge der Signale, die von der Vielzahl von Näherungssensoren empfangen werden, unter Verwendung des Prozessors umfasst.

3. Verfahren nach Anspruch 1, wobei das Bestimmen der Wischrichtung umfasst:
Ignorieren (502) eines der Signale von einem der Vielzahl von Näherungssensoren für eine zuvor bestimmte Zeitdauer unter Verwendung des Prozessors; und
Zuweisen (504) der Wischrichtung basierend auf einer Reihenfolge der Signale, die von der Vielzahl von Näherungssensoren empfangen werden, mit Ausnahme des ignorierten Signals, unter Verwendung des Prozessors.

4. Verfahren nach einem der Ansprüche 1 bis 3, wobei das Bestimmen der Wischrichtung das Zuweisen der Wischrichtung basierend darauf umfasst, ob die Signale angeben, dass sich das Objekt auf einen oder mehrere der Vielzahl von Näherungssensoren zu oder von diesem weg bewegt, unter Verwendung des Prozessors.

5. Verfahren nach einem der Ansprüche 1 bis 4, wobei das Empfangen der Signale das Empfangen der Signale an dem Prozessor von der Vielzahl von Näherungssensoren und eines weiteren Signals von dem Fingerabdrucksensor umfasst, wobei das weitere Signal eine Aktivierung des Fingerabdrucksensors angibt.

6. Verfahren nach einem der Ansprüche 1 bis 5, wobei der eine oder die mehreren Näherungssensoren jeweils einen Infrarotsensor umfassen, der eine lichtemittierende Diode und eine lichtempfangende Diode aufweist.

7. Elektronische Vorrichtung, umfassend:
eine Berührungsbildschirmanzeige, die auf der Vorderseite der Vorrichtung angeordnet ist;
einen Fingerabdrucksensor (108);
einen Prozessor (102); und angrenzend an den Fingerabdrucksensor,
eine Vielzahl von Näherungssensoren (106), die sich sowohl von dem Berührungsbildschirm als auch von dem Fingerabdrucksensor unterscheiden, wobei ein erster der Näherungssensoren auf einer Seite des Fingerabdrucksensors und ein zweiter der Näherungssensoren auf der anderen Seite des Fingerabdrucksensors liegt, wobei die Näherungssensoren (106) angepasst sind, um ein Signal auszugeben, das das Vorhandensein eines Objekts angibt, wobei das Objekt ein Finger oder ein Daumen ist;
und
einen Prozessor (102), der mit der Vielzahl von Näherungssensoren und dem Fingerabdrucksensor wirkgekoppelt ist, wobei der Prozessor konfiguriert ist, um eine Wischrichtung des Objekts hinsichtlich des Fingerabdrucksensors basierend auf Signalen zu bestimmen, die von der Vielzahl von Näherungssensoren empfangen werden, wobei die Signale ein Signal von jedem des ersten und des zweiten Näherungssensors einschließen und ferner konfiguriert sind, um eine Aktion auf der elektronischen Vorrichtung als Reaktion auf das Bestimmen der Wischrichtung und das Authentifizieren des Objekts durchzuführen, wobei:
die Vielzahl von Näherungssensoren und der Fingerabdrucksensor auf der Rückseite der elektronischen Vorrichtung positioniert sind oder auf einem Einfassungsbereich um die Anzeige der elektronischen Vorrichtung herum positioniert sind, und jeder der Vielzahl von Näherungssensoren auf einer anderen Seite des Fingerabdrucksensors positioniert ist; und die Aktion eine von Folgenden ist:
Öffnen einer Anwendung, Anrufen einer Telefonnummer, Senden einer zuvor bestimmten Textnachricht oder E-Mail, Aufnehmen eines Fotos mit einer Kamera auf der elektronischen Vorrichtung oder sichere Vorschau von Benachrichtigungen.

8. Elektronische Vorrichtung nach Anspruch 7, wobei der Prozessor konfiguriert ist, um die Wischrichtung durch Zuweisen der Wischrichtung basierend auf einer Reihenfolge der Signale zu bestimmen, die von der Vielzahl von Näherungssensoren empfangen werden.

9. Elektronische Vorrichtung nach Anspruch 7, wobei der Prozessor konfiguriert ist, um die Wischrichtung durch Folgendes zu bestimmen:
Ignorieren eines der Signale von einem der Vielzahl von Näherungssensoren für eine zuvor bestimmte Zeitdauer; und
Zuweisen der Wischrichtung basierend auf einer Reihenfolge der Signale, die von der Vielzahl von Näherungssensoren empfangen werden, mit Ausnahme des ignorierten Signals.

10. Elektronische Vorrichtung nach einem der Ansprüche 7 bis 9, wobei der Prozessor konfiguriert ist, um die Wischrichtung durch Zuweisen der Wischrichtung basierend darauf zu bestimmen, ob die Signale angeben, dass sich das Objekt auf einen oder mehrere der Vielzahl von Näherungssensoren zu oder von diesem weg bewegt.

11. Elektronische Vorrichtung nach einem der Ansprüche 7 bis 10, wobei der Fingerabdrucksensor angepasst ist, um ein Signal auszugeben, das die Aktivierung des Fingerabdrucksensors angibt.

12. Elektronische Vorrichtung nach einem der Ansprüche 7 bis 11, wobei der eine oder die mehreren Näherungssensoren jeweils einen Infrarotsensor umfassen, der eine lichtemittierende Diode und eine lichtempfangende Diode aufweist.

## Revendications

1. Procédé dans un dispositif électronique comprenant un processeur, un dispositif d'affichage à écran tactile placé à l'avant du dispositif, un capteur d'empreintes digitales, et adjacents au capteur d'empreintes digitales une pluralité de capteurs de proximité distincts à la fois de l'écran tactile et du capteur d'empreintes digitales, un premier capteur des capteurs de proximité se trouvant d'un côté du capteur d'empreintes digitales, et un second capteur des capteurs de proximité se trouvant d'un autre côté du capteur d'empreintes digitales, le procédé comprenant :
la réception (304, 404) de signaux au niveau du processeur du dispositif électronique provenant de la pluralité de capteurs de proximité, les signaux comportant un signal provenant de chacun des premier et second capteurs de proximité, les signaux indiquant la présence d'un objet ;
la détermination (306, 406) d'une direction de balayage de l'objet sur la base des signaux, à l'aide du processeur ;
dans lequel la détermination de la direction de balayage de l'objet se fait par rapport au capteur d'empreintes digitales ;
le fait de déterminer (308, 410) si le capteur d'empreintes digitales a authentifié l'objet ;
dans le cas où il est déterminé que le capteur d'empreintes digitales a authentifié l'objet, la réalisation d'une action (310, 408) sur le dispositif électronique en réponse à l'authentification et à la direction de balayage, à l'aide du processeur ; où :
la pluralité de capteurs de proximité et le capteur d'empreintes digitales sont positionnés à l'arrière du dispositif électronique ou sont positionnés sur une zone de cadran autour du dispositif d'affichage à écran tactile du dispositif électronique ;
la pluralité de capteurs de proximité sont positionnés chacun sur un côté différent du capteur d'empreintes digitales ;
l'objet est un doigt ou un pouce ;
et l'action est :
l'ouverture d'une application et/ou l'appel d'un numéro de téléphone et/ou l'envoi d'un SMS ou d'un courrier électronique prédéterminé et/ou la prise d'une photo avec un appareil de prise de vues sur l'appareil électronique et/ou la prévisualisation de notifications en toute sécurité.

2. Procédé selon la revendication 1, dans lequel la détermination de la direction de balayage comprend l'attribution de la direction de balayage sur la base de l'ordre des signaux reçus de la pluralité de capteurs de proximité, à l'aide du processeur.

3. Procédé selon la revendication 1, dans lequel la détermination de la direction de balayage comprend :
le fait d'ignorer (502) l'un des signaux provenant d'un capteur de la pluralité de capteurs de proximité pendant une période de temps prédéterminée, à l'aide du processeur ; et
l'attribution (504) de la direction de balayage sur la base d'un ordre des signaux reçus de la pluralité de capteurs de proximité à l'exclusion du signal ignoré, à l'aide du processeur.

4. Procédé selon l'une quelconque des revendications 1 à 3, dans lequel la détermination de la direction de balayage comprend l'attribution de la direction de balayage selon que les signaux indiquent que l'objet se rapproche ou s'éloigne d'un ou plusieurs capteurs de la pluralité de capteurs de proximité, à l'aide du processeur.

5. Procédé selon l'une quelconque des revendications 1 à 4, dans lequel la réception des signaux comprend la réception des signaux au niveau du processeur provenant de la pluralité de capteurs de proximité et d'un autre signal provenant du capteur d'empreintes digitales, l'autre signal indiquant l'activation du capteur d'empreintes digitales.

6. Procédé selon l'une quelconque des revendications 1 à 5, dans lequel le ou les capteurs de proximité comprennent chacun un capteur infrarouge doté d'une diode émettrice de lumière et d'une diode réceptrice de lumière.

7. Dispositif électronique comprenant :
un dispositif d'affichage à écran tactile placé à l'avant de l'appareil ;
un capteur d'empreinte digitale (108) ;
un processeur (102) ; et, adjacents au capteur d'empreintes digitales,
une pluralité de capteurs de proximité (106) distincts à la fois de l'écran tactile et du capteur d'empreintes digitales, un premier capteur des capteurs de proximité se trouvant d'un côté du capteur d'empreintes digitales, et un second capteur des capteurs de proximité se trouvant d'un autre côté du capteur d'empreintes digitales, les capteurs de proximité (106) étant conçus pour délivrer un signal indiquant la présence d'un objet, dans lequel l'objet est un doigt ou un pouce ;
et
un processeur (102) couplé fonctionnellement à la pluralité de capteurs de proximité et au capteur d'empreintes digitales, le processeur étant configuré pour déterminer une direction de balayage de l'objet par rapport au capteur d'empreintes digitales sur la base de signaux reçus de la pluralité de capteurs de proximité, les signaux comportant un signal provenant de chacun des premier et second capteurs de proximité, et étant en outre configuré pour effectuer une action sur le dispositif électronique en réponse à la détermination de la direction de balayage et à l'authentification de l'objet, dans lequel :
la pluralité de capteurs de proximité et le capteur d'empreintes digitales sont positionnés à l'arrière du dispositif électronique ou sont positionnés sur une zone de cadran autour du dispositif d'affichage du dispositif électronique, et chaque capteur de la pluralité de capteurs de proximité est positionné sur un côté différent du capteur d'empreintes digitales ; et l'action est :
l'ouverture d'une application et/ou l'appel d'un numéro de téléphone et/ou l'envoi d'un SMS ou d'un courrier électronique prédéterminé et/ou la prise d'une photo avec un appareil de prise de vues sur l'appareil électronique et/ou la prévisualisation de notifications en toute sécurité.

8. Dispositif électronique selon la revendication 7, dans lequel le processeur est configuré pour déterminer la direction de balayage en attribuant la direction de balayage sur la base d'un ordre des signaux reçus de la pluralité de capteurs de proximité.

9. Dispositif électronique selon la revendication 7, dans lequel le processeur est configuré pour déterminer la direction de balayage en :
ignorant l'un des signaux provenant de l'un de la pluralité de capteurs de proximité pendant une période de temps prédéterminée ; et
attribuant la direction de balayage sur la base d'un ordre des signaux reçus de la pluralité de capteurs de proximité à l'exclusion du signal ignoré.

10. Dispositif électronique selon l'une quelconque des revendications 7 à 9, dans lequel le processeur est configuré pour déterminer la direction de balayage en attribuant la direction de balayage selon que les signaux indiquent que l'objet se rapproche ou s'éloigne d'un ou plusieurs capteurs de la pluralité de capteurs de proximité.

11. Dispositif électronique selon l'une quelconque des revendications 7 à 10, dans lequel le capteur d'empreintes digitales est conçu pour délivrer un signal indiquant l'activation du capteur d'empreintes digitales.

12. Dispositif électronique selon l'une quelconque des revendications 7 à 11, dans lequel le ou les capteurs de proximité comprennent chacun un capteur infrarouge doté d'une diode émettrice de lumière et d'une diode réceptrice de lumière.
